# EUROPEAN PATENT APPLICATION

(11) **EP 4 521 219 A1**
(43) Date of publication of application: **12.03.2025**
(21) Application number: 23854455.5
(22) Date of filing: 16.08.2023
(51) Int. Cl.: G06F 3/0482

(54) **PAGE DISPLAY METHOD AND APPARATUS, AND DEVICE AND STORAGE MEDIUM**

(30) Priority: 16.08.2022 CN 202210983335
(71) Applicant: Beijing Zitiao Network Technology Co., Ltd., Beijing 100190 (CN)
(72) Inventor: ZHANG, Nuomeng, Beijing 100028 (CN); WANG, Daoyu, Beijing 100028 (CN); XU, Qi, Beijing 100028 (CN)
(74) Representative: Dentons UK and Middle East LLP
(86) International application number: PCT/CN2023/113229
(87) International publication number: WO 2024/037555

(57) **Abstract**

Embodiments of the present disclosure disclose a method and apparatus, and a device and a storage medium for interface display. The method includes: displaying a captured-image region and a material display region on a target interface in response to a preset operation, wherein an association relationship exists between the captured-image region and at least one of a display size or display position of the material display region; displaying a first image in the captured-image region; displaying at least one material identifier in the material display region; and displaying a capturing control on the target interface, wherein image content in the first image is consistent with framing content of a capturing function, and the capturing control is configured to perform, after being triggered in response to a target material identifier in a selected state exists in the at least one material identifier, capturing based on a target capturing material corresponding to the target material identifier.

## Description

### CROSS-REFERENCE TO RELATED APPLICATION(S)

This application claims priority to Chinese Patent Application No. 202210983335.4, filed with the China National Intellectual Property Administration on August 16, 2022, the disclosure of which is incorporated herein by reference in its entirety.

### FIELD

Embodiments of the present disclosure relate to the technical field of computers, and for example, to a method and apparatus, and a device and a storage medium for interface display.

### BACKGROUND

With the continuous development of computer technology, applications (APPs) have widespread functions. More and more users start to use APPs with capturing functions to capture media content.

### SUMMARY

The embodiments of the present disclosure provide a method and apparatus, a storage medium, and a device for interface display, which may optimize an interface display solution in the related technology.

In a first aspect, the embodiments of the present disclosure provide a method for interface display, including:
displaying a captured-image region and a material display region on a target interface in response to a preset operation, wherein an association relationship exists between the captured-image region and a size and/or display position of the material display region;
displaying a first image in the captured-image region, displaying, in the material display region, at least one material identifier corresponding to at least one capturing material, and displaying a capturing control on the target interface, wherein image content in the first image is consistent with framing content of a capturing function corresponding to the target interface; and the capturing control is configured to perform, after being triggered in response to a target material identifier in a selected state exists in the at least one material identifier, capturing based on a target capturing material corresponding to the target material identifier.

In a second aspect, the embodiments of the present disclosure further provide an apparatus for interface display, including:
a first display module, configured to: display a captured-image region and a material display region on a target interface in response to a preset operation, and an association relationship exists between the captured-image region and a size and/or display position of the material display region;
a second display module, configured to: display a first image in the captured-image region, display, in the material display region, at least one material identifier corresponding to at least one capturing material, and display a capturing control on the target interface, wherein image content in the first image is consistent with framing content of a capturing function corresponding to the target interface; and the capturing control is configured to perform, after being triggered in response to a target material identifier in a selected state exists in the at least one material identifier, capturing based on a target capturing material corresponding to the target material identifier.

In a third aspect, the embodiments of the present disclosure provide an electronic device. The electronic device includes:
one or more processors; and
a storage apparatus, configured to store one or more programs,
wherein the one or more programs, when executed by the one or more processors, cause the one or more processors to implement the method for interface display provided in the embodiments of the present disclosure.

In a fourth aspect, the embodiments of the present disclosure further provide a storage medium including computer-executable instructions. When executed by a computer processor, the computer processor is configured to perform the method for interface display provided in the embodiments of the present disclosure.

### BRIEF DESCRIPTION OF THE DRAWINGS

Throughout the accompanying drawings, identical or similar reference numerals represent identical or similar elements. It should be understood that the accompanying drawings are illustrative, and components and elements may not necessarily be drawn to scale.
FIG. 1 is a flowchart of a method for interface display according to an embodiment of the present disclosure;
FIG. 2 is a schematic diagram of an interface in the related technology;
FIG. 3 is a schematic diagram of an interface according to an embodiment of the present disclosure;
FIG. 4 is a schematic diagram of another interface according to an embodiment of the present disclosure;
FIG. 5 is a schematic diagram of still another interface according to an embodiment of the present disclosure;
FIG. 6 is a flowchart of another method for interface display according to an embodiment of the present disclosure;
FIG. 7 is a schematic diagram of another interface according to an embodiment of the present disclosure,
FIG. 8 is a schematic structural diagram of an apparatus for interface display according to an embodiment of the present disclosure, and
FIG. 9 is a schematic structural diagram of an electronic device according to the embodiments of the present disclosure.

### DETAILED DESCRIPTION OF EMBODIMENTS

The embodiments of the present disclosure will be described below with reference to the accompanying drawings. It should be understood that the accompanying drawings and embodiments of the present disclosure are only used for illustration, but are not intended to limit the protection scope of the present disclosure.

It should be understood that respective steps recorded in method implementations of the present disclosure can be executed in different orders and/or in parallel. In addition, the method implementations may include additional steps and/or omit the execution of the steps shown. The scope of the present disclosure is not limited in this aspect.

The term "include" and its variants as used herein mean widespread inclusion, namely, "including but not limited to". The term "based on" is "based at least in part on". The term "one embodiment" means "at least one embodiment". The term "another embodiment" means "at least another embodiment". The term "some embodiments" means "at least some embodiments". Relevant definitions of other terms will be given in the description below.

It should be noted that the concepts such as "first" and "second" mentioned in the present disclosure are only used to distinguish different apparatuses, modules, or units, and are not intended to limit the order or interdependence of the functions performed by these apparatuses, modules, or units.

It should be noted that the modifications of "one" and "plurality" mentioned in the present disclosure are indicative rather than restrictive, and those skilled in the art should understand that unless otherwise explicitly stated in the context, they should be understood as "one or more".

Messages or names of information interacted between a plurality of apparatuses in the implementations of the present disclosure are only for illustrative purposes and are not intended to limit the messages or the scope of the information.

It can be understood that before use of the technical solutions disclosed in various embodiments of the present disclosure, users should be informed of the type, scope of use, usage scenarios, and the like of personal information involved in the present disclosure in accordance with relevant laws and regulations in an appropriate manner, so as to obtain authorization from the users.

For example, in response to that an active request of a user has been received, prompt information is sent to the user to clearly remind the user that personal information of the user needs to be involved in an operation requested to be executed. Thus, the user can independently select whether to provide the personal information to software or hardware such as an electronic device, an application program, a server, or a storage medium that performs the operation of the technical solutions of the present disclosure according to the prompt information.

As an optional but non-restrictive implementation, in response to that an active request of a user has been received, prompt information is sent to the user through, for example, a pop-up window where the prompt information can be presented in text. In addition, the pop-up window can also carry a selection control for the user to select whether to "agree" or "refuse" to provide the personal information to the electronic device.

It can be understood that the above notification and the above user authorization obtaining process are only illustrative and do not constitute a limitation on the implementations of the present disclosure. Other methods that meet the relevant laws and regulations can also be applied to the implementations of the present disclosure.

It can be understood that data involved in the technical solutions (including but not limited to the data itself, and obtaining or use of the data) should comply with the requirements of corresponding laws and regulations and relevant provisions.

To enhance the effect of media content, a user may perform processing after capturing media content, and the processing process may be complex. If all the processing is manually completed by the user, a lot of energy is required, and the difficulty of creation is increased. During the capturing, an application can provide the user with capturing materials. By using the above capturing materials, it can be easy for the user to make media content with the capturing materials.

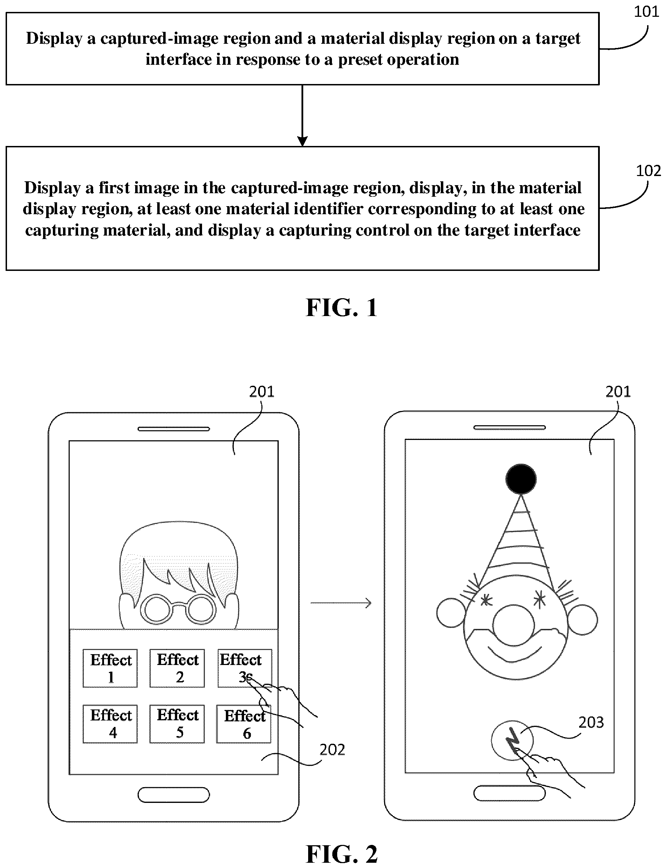

FIG. 1 is a flowchart of a method for interface display according to an embodiment of the present disclosure. This embodiment of the present disclosure is applicable to a situation for displaying a interface. The method may be performed by an apparatus for interface display. The apparatus can be implemented in the form of software and/or hardware. Alternatively, the apparatus is implemented through an electronic device. The electronic device can be a mobile terminal, a smartwatch, a tablet, a personal digital assistant, and another mobile terminal, or can be a personal computer (PC) end, a server, or the like.

As shown in FIG. 1, the method includes:
Step 101. A captured-image region and a material display region are displayed on a target interface in response to a preset operation. An association relationship exists between the captured-image region and a size and/or display position of the material display region.

In this embodiment of the present disclosure, the target interface may be an interface in a preset application, and the preset application may provide a multimedia content capturing function and may be installed in an electronic device. The type of the preset application is not limited, such as a video application, a live streaming application, a shopping application, or an information application, or another type of application. The type of the media content is not limited, such as image content or video content. The preset application may achieve a capturing function through an image acquisition apparatus such as a camera in an electronic device. In the capturing function, a user may be provided with capturing materials. By using the above capturing materials, it may be easy for the user to make media content with the capturing materials. The capturing materials are referred to as materials, and may include a capturing effect or a capturing filter, a template, and the like. The materials may include stickers, beauty effects, virtual animations, interaction controls, interaction games, and the like.

FIG. 2 is a schematic diagram of an interface in the related technology. In the related technology, if a user intends to use a material in a capturing function, the user needs to trigger displaying of a material panel 202 in a capturing interface 201. After selecting a desired material from the material panel 202 (assuming that a clown effect is selected), the user closes the material panel 202, and then activates capturing by clicking on a capturing button 203 on the capturing interface 201. It can be seen that when the material panel 202 is in a display state, the material panel 202 is located on a top layer of the capturing interface 201, and will block framing content (e.g. a user head image in FIG. 2) of the capturing function displayed on the capturing interface 201. Furthermore, the material panel 202 needs to be closed before capturing is triggered. The operation path is complex, and the capturing experience with the material is poor.

In this embodiment of the present disclosure, a target interface is provided. When a material needs to be used, a captured-image region and a material display region can be displayed simultaneously on the target interface by inputting a preset operation (the type of the preset operation is not limited). An association relationship exists between the captured-image region and a size and/or display position of the material display region. The association relationship can be set according to an actual need. For example, a sum of heights of the two regions is equal to a height of the target interface, or the heights of the two regions are in negative correlation, or the two regions have an overlapping boundary, or the like. Alternatively, the captured-image region and the material display region do not have an intersection, namely, do not have overlapping portions. A positional relationship, sizes, and the like of the two regions are not limited.

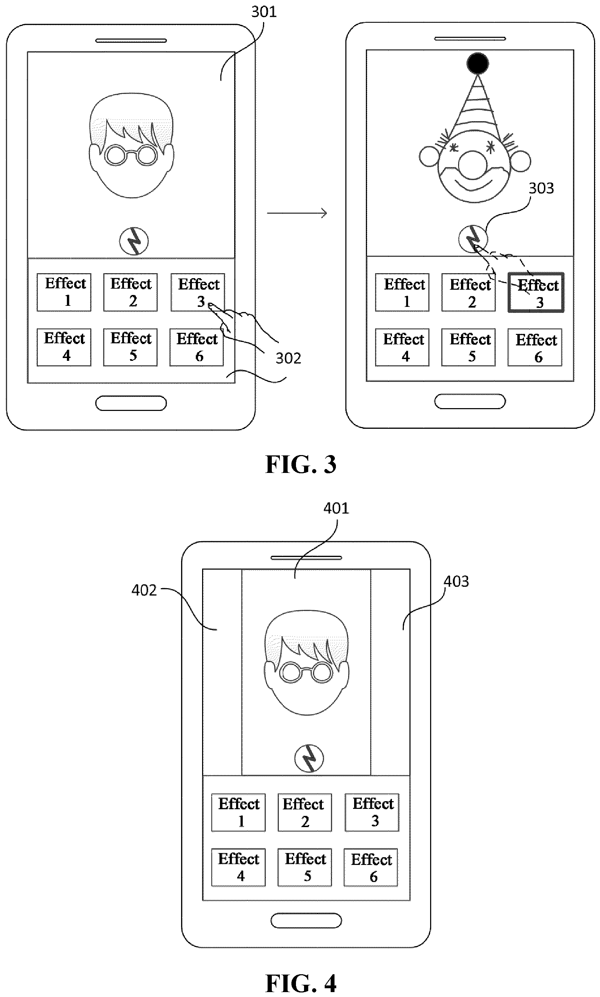

FIG. 3 is a schematic diagram of an interface according to an embodiment of the present disclosure. As shown in FIG. 3, a captured-image region 301 and a material display region 302 which do not have an intersection can be simultaneously displayed on a target interface.

Step 102. A first image is displayed in the captured-image region; at least one material identifier corresponding to at least one capturing material is displayed in the material display region; and a capturing control is displayed on the target interface. Image content in the first image is consistent with framing content of a capturing function corresponding to the target interface; and the capturing control is configured to perform, after being triggered in response to a target material identifier in a selected state exists in the at least one material identifier, capturing based on a target capturing material corresponding to the target material identifier.

Exemplarily, the target interface corresponds to the capturing function. The first image can be understood as an image including the framing content of the capturing function corresponding to the target interface. The framing content of the capturing function can be understood as image content acquired by a camera or another image sampling apparatus, which can be related to an attribute of the camera (e.g. a lens type) or a capturing parameter (e.g. a focal length multiple) of the camera. If capturing is triggered at this time, captured image content or video frame content is the framing content of the capturing function. As shown in FIG. 3, the first image that includes the framing content (e.g. a user head image) of the capturing function is displayed in the captured-image region 301. The material display region 302 will not block the user head image. According to FIG. 2, it can be seen that the solution provided in this embodiment of the present disclosure can enable the user to view more complete framing content in the process of selecting materials.

Exemplarily, at least one material identifier is displayed in the material display region. Usually, a plurality of material identifiers is displayed. The material identifiers can be names, schematic diagrams, or the like of the materials to which the material identifiers belong. The user may perform a selection operation on a material corresponding to a material identifier by triggering the material identifier. Alternatively, in response to the user does not select any material, a preset material may be set to be in a selected state, or no material in a selected state exists by default. As shown in FIG. 3, six material identifiers are displayed in the material display region 302. Each material identifier corresponds to one material.

Exemplarily, the capturing control is configured to trigger a capturing operation. If a material identifier in the material display region is selected, the material identifier is marked as a target material identifier. After the capturing control is triggered, capturing is performed based on the target material corresponding to the target material identifier. The capturing control is displayed on the target interface, and its display position is not limited. The capturing control can be displayed in the captured-image region, in the material display region, in both the captured-image region and the material display region (e.g. at a junction of the two regions), or in a region, except the captured-image region and the material display region, on the target interface. As shown in FIG. 3, the capturing control 303 can be displayed in the captured-image region 301 for being triggered by the user.

According to the method for interface display provided in this embodiment of the present disclosure, a captured-image region and a material display region are displayed on a target interface in response to a preset operation, and an association relationship exists between the captured-image region and a size and/or display position of the material display region; and a first image is displayed in the captured-image region, at least one material identifier corresponding to at least one capturing material is displayed in the material display region; and a capturing control is displayed on the target interface. Image content in the first image is consistent with framing content of a capturing function corresponding to the target interface. The capturing control is configured to perform, after being triggered in response to a target material identifier in a selected state exists in the at least one material identifier, capturing based on a target capturing material corresponding to the target material identifier. By use of the above technical solution, the image content of the first image is consistent with the framing content of the capturing function corresponding to the target interface, so that the user may comprehensively view the framing content of the capturing function in the process of selecting a material. After selecting a material to be used, the user can directly use selected material for capturing by triggering the capturing control, which is conducive to improving capturing efficiency and enhancing the capturing experience.

In some embodiments, the method may further include in response to a triggering operation for the capturing control, capturing is performed based on the target capturing material corresponding to the target material identifier, and work to be posted is determined according to a capturing result. The advantage of this setting is that the capturing result with the material may be used as the work to be posted, which is conducive to improving the convenience of posting work and the posting efficiency.

In some embodiments, in response to the target material identifier in the selected state exists in the at least one material identifier, the first image includes an image obtained after the target capturing material is applied to captured content. The advantage of this setting is that the user can be allowed to more intuitively view a use effect of the material before triggering the capturing, making it convenient for the user to select an appropriate material from the material display region, and to apply the selected material to the framing content in advance, which is conducive to improving the capturing efficiency.

In some embodiments, a captured-image region and a material display region are displayed on a target interface in response to a preset operation, and it includes switching from the capturing interface to the target interface is performed in the capturing interface in response to a preset interface switching operation, and the captured-image region and the material display region are displayed on the target interface. The advantage of this setting is that the user may easily perform switching from the capturing interface to the target interface by inputting the preset interface switching operation on the capturing interface.

The type of the preset interface switching operation is not limited. For example, it may be a triggering operation for a material display control (the triggering operation may be, for example, a click operation, a long press operation, a double-click operation, or a sliding operation in a preset direction), or it may be a sliding operation (e.g. sliding upward) for the capturing interface in the preset direction.

In some embodiments, a second image corresponding to the capturing function is displayed on the capturing interface. A size of the first image is less than a size of the second image. A size ratio of the first image is consistent with a size ratio of the second image. Image content of the second image is consistent with the framing content of the capturing function corresponding to the target interface. The size ratio can be an aspect ratio. For example, the aspect ratio of the first image and the aspect ratio of the second image are both 4: 3. The advantage of this setting is that the second image usually occupies the entire capturing interface or occupies a large display area in the capturing interface. The target interface usually has the same size as the capturing interface. To effectively utilize a display space of the target interface, the second image may be scaled down at the same proportion to obtain the first image and is then displayed on the target interface.

In some embodiments, the captured-image region is included in a target region. The target region further includes a control display region. An association relationship exists between a size of the target region and a size of the material display region. The advantage of this setting is that since the first image is scaled down at the same proportion based on the second image, so that a blank region exists in the target interface. The blank region can be used as the control display region. When relevant controls need to be displayed, they can be displayed in this blank region, making it convenient for the user to perform an interaction operation and enhancing the user experience. The control display region can be one or more closed regions. The association relationship exists between the size of the target region and the size of the material display region. For example, the target region and the material display region do not have an intersection.

FIG. 4 is a schematic diagram of another interface according to an embodiment of the present disclosure. Assuming that a region, except a material display region, on the target interface is a target region, a captured-image region 401 is included in the target region. The target region further includes a first control display region 402 and a second control display region 403 which are respectively located on two sides of the captured-image region 401. The control display region is configured to display controls, and whether to display the controls can be determined according to different usage states.

In some embodiments, a target control is displayed in the control display region. The target control includes at least one of a capturing setting control, a material associated control, or the capturing control. The advantage of this setting is that a user may better perform capturing by triggering the target control, which further enhances the capturing experience.

Exemplarily, the capturing setting control may be understood as a control configured to set relevant parameters of the capturing operation. The capturing setting control may include a front camera and rear camera switching control, a flash light control, a beauty on or off control, and delayed capturing control. When the target control includes the capturing setting control, relevant settings can be made on the current capturing through the target control before the capturing control is triggered.

Exemplarily, the material associated control can be understood as a control related to materials. The material associated control may include a control related to attributes of the materials, such as a material author identifier control or a material popularity control. For example, a profile interface of an author of the target capturing material can be viewed by triggering the material author identifier control. The number of times of use of the target capturing material within a preset period of time (e.g. the latest month or the latest week) can be viewed by triggering the material popularity control.

Exemplarily, the material associated control may further include a material-based interaction control. The material-based interaction control may be, for example, a material favorite control, a material favorite-cancel control, or a material share control. For example, the target capturing material can be favorited, so that it is convenient to quickly find the target capturing material for next use. When the material share control is triggered, the target capturing material may be shared with a target user, such as a contact, to facilitate material-based interactions with the target user.

In some embodiments, the currently displayed target control in the control display region is associated with the target capturing material. The advantage of this setting is that the target control can be individually displayed according to different selected materials.

Alternatively, at least one of a type, a number, or a style of the currently displayed target control in the control display region is associated with the target capturing material.

For example, regarding a material that requires front-camera-based capturing, the front camera and rear camera switching control may not be displayed. However, regarding a material without restriction, the front camera and rear camera switching control may be displayed for setting by the user according to an actual need. For another example, if the target capturing material has not yet been favorited by the user, the material favorite control may be displayed. If the target capturing material has already been favorited, the material favorite-cancel control may be displayed or no favorite operation-related control will be displayed. Alternatively, if the target capturing material has not yet been favorited, a hollow style favorite control is displayed. If the target capturing material has already been favorited, a solid style favorite control is displayed.

In some embodiments, the method further includes: A preset hovering control is displayed on a top layer of the material display region, and a resource identifier corresponding to a preset media resource corresponding to the target capturing material is displayed in the preset hovering control. Exemplarily, regarding some materials, there may be a situation where a media resource needs to be loaded from a preset source as a capturing background or other content to be filled in the materials. The preset hovering control is displayed on the top layer of the material display region, and a resource identifier is displayed in the control. This may facilitate the user to quickly select a preset media resource to participate in the capturing of the materials, and the preset hovering control will not block the first image. The resource identifier may be a thumbnail of the media resource. The above preset source may include, for example, a local photo album, a first set composed of preset media resources selected by a current user when historically using the target capturing material, and a second set composed of preset media resources selected by a target user when historically using the target capturing material. If the preset source is the second set mentioned above, the preset source needs to be displayed in the preset hovering control in a case of obtaining a full permission from the target user. Alternatively, the target user is a user having a preset interaction relationship with the current user, such as a mutual follow relationship.

In some embodiments, a display style of the material display region includes a first interaction style and a second interaction style. Different interaction styles correspond to different interaction operations. The advantage of this setting is that the display style of the material display region can be enriched, and the diverse interaction needs of the user can be met.

In some embodiments, the first interaction style includes material identifiers which are arranged in a single-row list style, and/or, the second interaction style includes material identifiers which are arranged in a matrix style. After the material identifiers are arranged in the single-row list style, the display space can be saved. After the material identifiers are arranged in the matrix style, more material identifiers can be displayed, thereby improving the efficiency of selecting materials.

In some embodiments, switching from a capturing interface to the target interface is performed in response to a preset interface switching operation for the capturing interface, and the captured-image region and the material display region on the target interface are displayed, and it includes: switching from a preset region to the material display region is performed in response to a preset region switching operation for the capturing interface, and the material display region after switching is displayed in the first interaction style; and switching from the capturing interface to the target interface is performed in response to the preset interface switching operation, and the captured-image region and the material display region are displayed on the target interface, and the material display region in the target interface is displayed in the second interaction style. The advantage of this setting is that the display modes of two different material display regions can be flexibly switched.

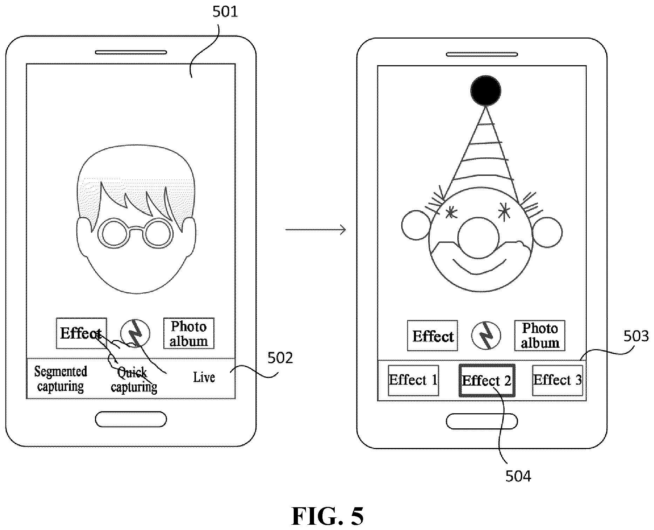

Alternatively, the preset region may be, for example, an interface label display region or a toolbar region in the capturing interface. FIG. 5 is a schematic diagram of still another interface according to an embodiment of the present disclosure. A captured-image region 501 and a preset region 502 are displayed on a capturing interface. The preset region 502 can be understood as a toolbar region. Different capturing mode options are displayed in the toolbar region. After a user clicks on a material control, it can be considered that a preset region switching operation is received, and the preset region 502 is switched to the material display region 503. The material display region 503 includes material identifiers which are arranged in a single-row list style.

Alternatively, the material display region displayed in the first interaction style includes a sliding list including at least one material identifier corresponding to at least one capturing material, and a preset expand control. A preset triggering region is set in the sliding list in advance. In a sliding process of the user in the sliding list, when an overlap area between one material identifier and the preset triggering region reaches a preset threshold, the material identifier can be determined as a selected target material identifier. For example, the second material in FIG. 5 is a target material identifier 504.

Alternatively, a size of a material display region in the second interaction style is larger than size of a material display region in the first interaction style. The number of material identifiers displayed in the material display region in the second interaction style is greater than the number of material identifiers in the material display region in the first interaction style. The preset interface switching operation may be, for example, clicking on the preset expansion control.

In some embodiments, the method further includes in response to a preset sliding operation for the sliding list, the at least one material identifier in the sliding list is controlled to move, and the preset expand control is hidden in the moving process, to increase the material identifiers displayed in the sliding list. The advantage of this setting is that the user generally does not choose to trigger the preset expansion control when sliding the material identifier. Therefore, the preset expansion control may be hidden to display more material identifiers and increase the utilization rate of the display space.

Alternatively, when the user stops inputting the preset sliding operation, if the user releases the finger, the displaying of the preset expansion control is restored.

In some embodiments, switching from the capturing interface to the target interface is performed and it includes a size of the captured-image region is adjusted in the capturing interface to cause the adjusted captured-image region to adapt to the material display region displayed in the second interaction style, to achieve the switching from the capturing interface to the target interface. The advantage of this setting is that in the interface switching process, the captured-image region can be dynamically adjusted, to improve the smoothness of interface switching and enhance the switching effect.

Alternatively, a size of the captured-image region in the capturing interface is adjusted, which includes: The second image corresponding to the capturing function in the capturing interface is scaled down into the first image. The advantage of this setting is that the image corresponding to the capturing function is dynamically adjusted, which further improves the smoothness of image switching and avoids the impact of jump of a captured image on the captured content viewing experience of the user.

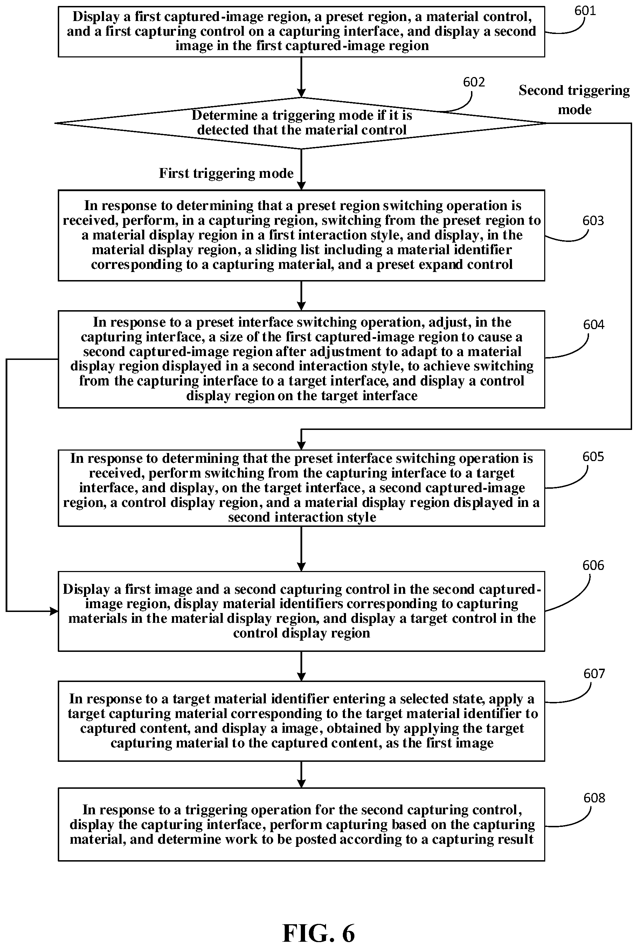

FIG. 6 is a flowchart of another method for interface display according to an embodiment of the present disclosure. This embodiment of the present disclosure will be explained based on the optional solutions in the above embodiment. The method includes the following steps:
Step 601. A first captured-image region, a preset region, a material control, and a first capturing control are displayed on a capturing interface, and a second image is displayed in the first captured-image region.

Image content of the second image is consistent with framing content of a capturing function.

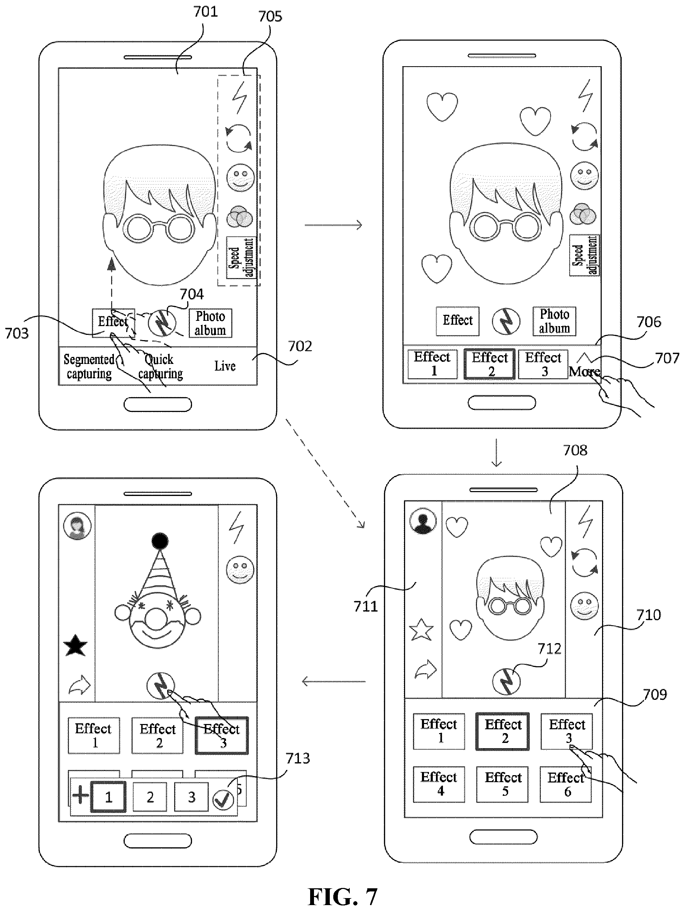

FIG. 7 is a schematic diagram of another interface according to an embodiment of the present disclosure. As shown in FIG. 7, a first captured-image region 701, a preset region 702, a material control 703, and a first capturing control 704 are displayed on the capturing interface. A second image, such as a user head image, is displayed in the first captured-image region 701. In addition, a control region 705 may be further displayed on the capturing interface. Various controls for capturing setting can be displayed in the control region 705, such as a flash light control, a front camera and rear camera switching control, a beauty on or off control, a filter setting control, and a speed adjustment control in FIG. 7 in sequence. Content in the material control 703 may be a schematic diagram of a default capturing material.

Step 602. A triggering mode is determined if it is detected that the material control is triggered. Step 603 is performed if the triggering mode is a first triggering mode. Step 605 is performed if the triggering mode is a second triggering mode.

Exemplarily, in this embodiment of the present disclosure, two modes for triggering the material control 703 can be provided. The first triggering mode may be, for example, clicking, and the second triggering mode may be, for example, sliding upward.

Step 603. In a case of determining that a preset region switching operation is received, switching from the preset region to a material display region in a first interaction style is performed in a capturing region, and a sliding list including a material identifier corresponding to a capturing material, and a preset expand control are displayed in the material display region.

Exemplarily, the first interaction style includes material identifiers which are arranged in a single-row list style. If a user triggers the material control 703 (the schematic diagram of the solid line hand) by clicking, it may determine that the preset region switching operation is received. The preset region 702 is switched to a material display region 706 displayed in the first interaction style, and a sliding list including three material identifiers and a preset expansion control 707 are displayed in the material display region 706. Assuming that the material display region 706 is initially displayed, the default capturing material can be set to be in a selected state. Assuming that effect 2 is the default capturing material, an effect of which is to add a heart-shaped sticker, the heart-shaped sticker may be applied to current captured content, to obtain an image displayed in the first captured-image region. The first capturing control 704 is still displayed in the first captured-image region. If the user intends to use the default capturing material for capturing, the user can trigger capturing by triggering the first capturing control 704. Alternatively, if the user intends to use no material for capturing, the user may trigger the material control 703 again by clicking, and switch the material display region 706 back to the preset region 702.

Step 604. In response to a preset interface switching operation, a size of the first captured-image region is adjusted in the capturing interface to cause a second captured-image region after adjustment to adapt to a material display region displayed in a second interaction style to achieve switching from the capturing interface to a target interface. A control display region is displayed on the target interface, and step 606 is performed.

Exemplarily, the second interaction style includes material identifiers which are arranged in a matrix style. After the user clicks on the preset expansion control 707, the size of the first captured-image region is scaled down to adapt to a second captured-image region 708 of a material display region 709 displayed in the second interaction style, thereby achieving switching from the capturing interface to the target interface, and a first control display region 710 and a second control display region 711 are displayed on the target interface.

Alternatively, a preset collapse control may be displayed in the material display region 709. When the user triggers the preset collapse control, the user returns to the capturing interface including the material display region 706 displayed in the first interaction style.

Step 605. In a case of determining that the preset interface switching operation is received, switching from the capturing interface to a target interface is performed, and a second captured-image region, a control display region, and a material display region displayed in a second interaction style are displayed on the target interface.

Exemplarily, if the user triggers the material control 703 (the schematic diagram of the dotted-line hand) by sliding upward, it can determine that the preset interface switching operation is received, and switching from the capturing interface to the target interface is performed.

Alternatively, the user may perform switching from the target interface back to the capturing interface including the preset region by inputting a sliding downward operation.

Step 606. A first image and a second capturing control are displayed in the second captured-image region; material identifiers corresponding to capturing materials are displayed in the material display region; and a target control is displayed in the control display region.

As shown in FIG. 7, the first image with effect 2 is displayed in the second captured-image region 708. Image content in the first image is consistent with the framing content of the capturing function, namely, the image content of the second image. As size of the first image is smaller than that of the second image, and a size ratio of the first image is consistent with that of the second image. A second capturing control 712 is displayed in the second captured-image region 708. If the second capturing control 712 is triggered, capturing is performed based on effect 2.

The first control display region 710 is configured to display capturing setting controls corresponding to effect 2. The number of the displayed capturing setting controls is less than the number of the controls displayed in the control region 705, for example, including the flash light control, the front camera and rear camera switching control, and the beauty on/off control. The second control display region 711 is configured to displaying material associated controls corresponding to effect 2, for example, including the material author identifier control, the material favorite control, and the material share control.

Step 607. In response to a target material identifier entering a selected state, a target capturing material corresponding to the target material identifier is applied to captured content, and an image obtained by applying the target capturing material to the captured content is displayed as the first image.

As shown in FIG. 7, if the user actively selects effect 3 (e.g. clown effect), material identifiers corresponding to effect 3 is marked as target material identifiers, and effect 3 is applied to the captured content to obtain a new first image.

Exemplarily, after the selected material is replaced, controls displayed in the control display region can be adjusted. As shown in FIG. 7, after effect 3 is selected, the first control display region 710 is changed to be configured to display capturing setting controls corresponding to effect 3, such as the flash light control and the beauty on/off control. The second control display region 711 is changed to be configured to display material associated controls corresponding to effect 3, for example, including the material author identifier control, the material favorite-cancel control, and the material share control.

Alternatively, if effect 3 requires selecting images from an album, a preset hovering control 713 may be displayed on a top layer of the material display region 709, and resource identifiers corresponding to media resources in the album are displayed in the preset hovering control 713. The resource identifiers may be thumbnails of the images (represented by digits in FIG. 7).

Step 608. In response to a triggering operation for the second capturing control, the capturing interface is displayed; capturing is performed based on the capturing material; and work to be posted is determined according to a capturing result.

After clicking on the second capturing control 712, the user starts capturing. After the capturing ends, the work to be posted is determined according to the capturing result. If the user is satisfied with the work to be posted, the user may directly post it to improve the work posting efficiency. Exemplarily, after clicking on the second capturing control 712, the user may keep capturing on the current target interface or jump to an interface for displaying the framing content in full screen for capturing

According to the method for interface display provided in this embodiment of the present disclosure, a user is provided with two modes for displaying material identifiers on a capturing interface. A capturing interface including material identifiers which are arranged in a single-row list style and a target interface including an effect material identifier which are arranged in a matrix style may be respectively displayed. On the two interfaces, captured content will not be blocked by the material identifiers, so that the user may comprehensively view the captured content. Furthermore, the two interfaces may be flexibly switched, so that the user may choose to enter interfaces in different modes according to an actual need and select materials on the interfaces. After selecting the materials, the materials are applied to the captured content, so that the user may view capturing effects comprehensively in the process of selecting the materials. In addition to selecting the materials, based on the control display region, the user can further perform capturing setting and control-based interaction on the selected materials, to improve the capturing experience and capturing effect. When it is determined that the selected materials need to be configured to capturing, the user can directly trigger the capturing control on the current interface for capturing, without returning to the initial capturing interface, which effectively improves the capturing efficiency and further enhances the capturing experience. After the capturing, the user may directly determine work to be posted based on the capturing result, thereby improving the work posting efficiency.

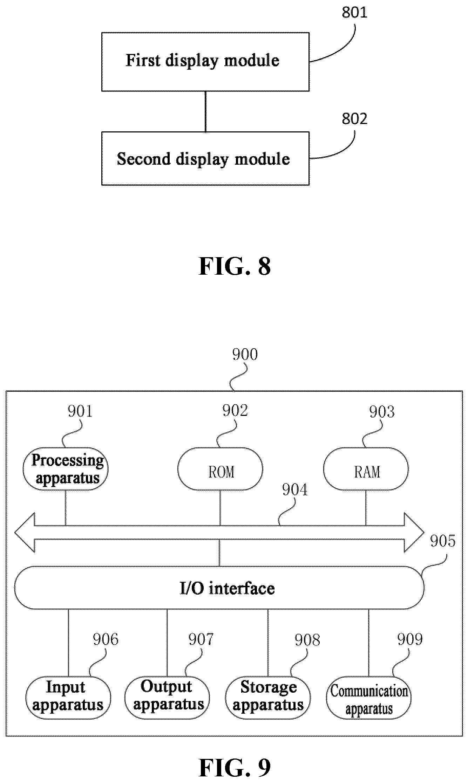

FIG. 8 is a schematic structural diagram of an apparatus for interface display according to an embodiment of the present disclosure. As shown in FIG. 8, the apparatus includes: a first display module 801 configured to: display a captured-image region and a material display region on a target interface in response to a preset operation, wherein an association relationship exists between the captured-image region and a size and/or display position of the material display region; and a second display module 802 configured to: display a first image in the captured-image region, display, in the material display region, at least one material identifier corresponding to at least one capturing material, and display a capturing control on the target interface, wherein image content in the first image is consistent with framing content of a capturing function corresponding to the target interface; and the capturing control is configured to perform, after being triggered in response to a target material identifier in a selected state exists in the at least one material identifier, capturing based on a target capturing material corresponding to the target material identifier.

According to the apparatus for interface display provided in this embodiment of the present disclosure, a captured-image region and a material display region are displayed on a target interface in response to a preset operation, wherein an association relationship exists between the captured-image region and a size and/or display position of the material display region; and a first image is displayed in the captured-image region, at least one material identifier corresponding to at least one capturing material is displayed in the material display region; and a capturing control is displayed on the target interface. Image content in the first image is consistent with framing content of a capturing function corresponding to the target interface. The capturing control is configured to perform, after being triggered in response to a target material identifier in a selected state exists in the at least one material identifier, capturing based on a target capturing material corresponding to the target material identifier. By use of the above technical solution, the image content of the first image is consistent with the framing content of the capturing function corresponding to the target interface, so that the user may comprehensively view the framing content of the capturing function in the process of selecting a material. After selecting a material to be used, the user may directly use selected material for capturing by triggering the capturing control, which is conducive to improving capturing efficiency and enhancing the capturing experience.

Alternatively, the capturing control is displayed in the captured-image region and/or the material display region.

Alternatively, the first display module is configured to: perform, in a capturing interface, switching from the capturing interface to the target interface in response to a preset interface switching operation, and display the captured-image region and the material display region on the target interface.

Alternatively, a second image corresponding to the capturing function is displayed on the capturing interface. A size of the first image is less than a size of the second image. A size ratio of the first image is consistent with a size ratio of the second image.

Alternatively, the captured-image region is included in a target region. The target region further includes a control display region. An association relationship exists between a size of the target region and a size of the material display region.

Alternatively, a target control is displayed in the control display region. The target control includes at least one of a capturing setting control, a material associated control, or the capturing control.

Alternatively, the material associated control includes a material attribute related control and/or a material-based interaction control.

Alternatively, the currently displayed target control in the control display region is associated with the target capturing material.

Alternatively, at least one of a type, a number, or a style of the currently displayed target control in the control display region is associated with the target capturing material.

Alternatively, the apparatus further includes: a hovering control display module configured to: display a preset hovering control on a top layer of the material display region, and display a resource identifier corresponding to a preset media resource corresponding to the target capturing material in the preset hovering control.

Alternatively, a display style of the material display region includes a first interaction style and a second interaction style. Different interaction styles correspond to different interaction operations.

Alternatively, the first interaction style includes material identifiers which are arranged in a single-row list style, and/or, the second interaction style includes material identifiers which are arranged in a matrix style.

Alternatively, the first display module includes: a region switching unit, configured to perform, in the capturing interface, switching from a preset region to the material display region in response to a preset region switching operation performed, wherein the material display region after switching is displayed in the first interaction style; and an interface switching unit, configured to perform switching from the capturing interface to the target interface in response to the preset interface switching operation, and display the captured-image region and the material display region on the target interface, wherein the material display region in the target interface is displayed in the second interaction style.

Alternatively, the interface switching unit is configured to perform switching from the capturing interface to the target interface in the following method: adjusting a size of the captured-image region in the capturing interface to cause the adjusted captured-image region to adapt to the material display region displayed in the second interaction style to achieve the switching from the capturing interface to the target interface.

Alternatively, the interface switching unit is configured to adjust the size of the captured-image region in the capturing interface in the following way scaling down the second image corresponding to the capturing function in the capturing interface into the first image.

In some embodiments, the material display region displayed in the first interaction style includes a sliding list including the at least one material identifier corresponding to the at least one capturing material, and a preset expand control, and the apparatus further includes: a hiding module, configured to: in response to a preset sliding operation for the sliding list, control the at least one material identifier in the sliding list to move, and hide the preset expand control in the moving process to increase the material identifiers displayed in the sliding list.

Alternatively, in response to the target material identifier in the selected state exists in the at least one material identifier, the first image includes an image obtained after the target capturing material is applied to captured content.

Alternatively, the apparatus further includes: a work-to-be-posted determining module, configured to: in response to a triggering operation for the capturing control, perform capturing based on the target capturing material corresponding to the target material identifier, and determine work to be posted according to a capturing result.

Alternatively, the association relationship exists between the captured-image region and at least one of the size or display position of the material display region includes the captured-image region and the material display region do not have an intersection.

The interface display apparatus provided in this embodiment of the present disclosure can implement the method for interface display provided in any embodiment of the present disclosure, and includes corresponding functional modules for implementing the method and corresponding effects.

The multiple units and modules included in the above apparatus are only divided according to a functional logic, but are not limited to the above division, as long as the corresponding functions can be achieved. In addition, the name of each functional unit is only for the purpose of distinguishing and is not used to limit the protection scope of the embodiments of the present disclosure.

FIG. 9 is a schematic structural diagram of an electronic device according to the embodiments of the present disclosure. Reference is now made to FIG. 9 below, which illustrates a schematic structural diagram of an electronic device (namely, a terminal device or a server in FIG. 9) 900 suitable for implementing an embodiment of the present disclosure. The terminal device in the embodiments of the present disclosure may include, but is not limited to, a mobile phone, a laptop, a digital broadcast receiver, a Personal Digital Assistant (PDA), a Portable Android Device (PAD), a Portable Media Player (PMP), a mobile terminal such as a vehicle-mounted terminal (for example, a vehicle-mounted navigation terminal), and a fixed terminal such as digital television (TV) and a desktop computer. The electronic device shown in FIG. 9 is only an example and should not impose any limitations on the functionality and scope of use of the embodiments of the present disclosure.

As shown in FIG. 9, the electronic device 900 may include a processing apparatus (such as a central processing unit and graphics processor) 901 that can perform various appropriate actions and processing according to programs stored in a Read-Only Memory (ROM) 902 or loaded from a storage apparatus 908 to a Random Access Memory (RAM) 903. Various programs and data required for operations of the electronic device 900 may also be stored in the RAM 903. The processing apparatus 901, the ROM 902, and the RAM 903 are connected to each other through a bus 904. An Input/ Output (I/O) interface 905 is also connected to the bus 904.

Usually, following apparatuses can be connected to the I/O interface 905: an input apparatus 906 including a touch screen, a touchpad, a keyboard, a mouse, a camera, a microphone, an accelerometer, a gyroscope, and the like; an output apparatus 907 including a Liquid Crystal Display (LCD), a speaker, a vibrator, and the like; a storage apparatus 908 including a magnetic tape, a hard disk drive, and the like; and a communication apparatus 909. The communication apparatus 909 can allow the electronic device 900 to wirelessly or wiredly communicate with other devices to exchange data. Although FIG. 9 shows the electronic device 900 with multiple apparatuses, it should be understood that the electronic device 900 is not required to implement or have all the apparatuses shown, and can alternatively implement or have more or fewer apparatuses.

According to the embodiments of the present disclosure, the process described in the reference flowchart above can be implemented as a computer software program. For example, the embodiments of the present disclosure include a computer program product, including a computer program carried on a non-transitory computer-readable medium, and the computer program includes program codes configured to perform the methods shown in the flowcharts. In such an embodiment, the computer program may be downloaded and installed from a network through the communication apparatus 909, or installed from the memory 908, or installed from the ROM 902. When the computer program is executed by the processing apparatus 901, the above-mentioned functions defined in the methods of the embodiments of the present disclosure are executed.

Messages or names of information interacted between a plurality of apparatuses in the implementations of the present disclosure are only for illustrative purposes and are not intended to limit the messages or the scope of the information.

The electronic device provided in this embodiment of the present disclosure and the method for interface display provided in the above embodiment belong to the same inventive concept. Technical details not fully described in this embodiment can be found in the above embodiments, and this embodiment has the same effects as the above embodiments.

The embodiments of the present disclosure provide a computer storage medium having a computer program stored thereon. Running of the program by a processor implements the method for interface display provided in the above embodiment.

The computer-readable medium mentioned in the present disclosure can be a computer-readable signal medium, a computer-readable storage medium, or any combination of the computer-readable signal medium and the computer-readable storage medium. The computer-readable storage medium can be, for example, but not limited to, electric, magnetic, optical, electromagnetic, infrared, or semiconductor systems, apparatuses, or devices, or any combination of the above. More specific examples of the computer-readable storage medium may include but are not limited to: an electrical connection with one or more wires, a portable computer disk, a hard disk drive, a RAM, a ROM, an Erasable Programmable Read Only Memory (EPROM) or flash memory, an optical fiber, a Compact Disc Read-Only Memory (CD-ROM), an optical storage device, a magnetic storage device or any suitable combination of the above. In the present disclosure, the computer-readable storage medium may be any tangible medium that contains or stores a program, and the program can be used by or in combination with an instruction execution system, apparatus, or device. In the present disclosure, the computer-readable signal media may include data signals propagated in a baseband or as part of a carrier wave, which carries computer-readable program codes. The propagated data signals can be in various forms, including but not limited to: electromagnetic signals, optical signals, or any suitable combination of the above. The computer-readable signal medium may also be any computer-readable medium other than a computer-readable storage medium. The computer-readable signal medium can send, propagate, or transmit programs for use by or in combination with an instruction execution system, apparatus, or device. The program codes comprised in the computer-readable medium can be transmitted using any suitable medium, including but not limited to: a wire, an optical cable, a Radio Frequency (RF), and the like, or any suitable combination of the above.

In some implementations, clients and servers can communicate using any currently known or future developed network protocol such as a HyperText Transfer Protocol (HTTP), and can intercommunicate and be interconnected with digital data in any form or medium (for example, a communication network). Examples of the communication network include a Local Area Network (LAN), a Wide Area Network (WAN), an internet (such as an Internet), a point-to-point network (such as an ad hoc point-to-point network, and any currently known or future developed network.

The computer-readable medium may be included in the electronic device or exist alone and is not assembled into the electronic device.

The above computer-readable medium carries one or more programs. When the one or more programs are run by the electronic device, the electronic device is caused to: display a captured-image region and a material display region on a target interface in response to a preset operation, wherein an association relationship exists between the captured-image region and a size and/or display position of the material display region; and display a first image in the captured-image region, display, in the material display region, at least one material identifier corresponding to at least one capturing material, and display a capturing control is displayed on the target interface. Image content in the first image is consistent with framing content of a capturing function corresponding to the target interface. The capturing control is configured to perform, after being triggered in response to a target material identifier in a selected state exists in the at least one material identifier, capturing based on a target capturing material corresponding to the target material identifier.

Computer program codes for performing the operations of the present disclosure may be written in one or more programming languages or a combination thereof. The above programming languages include but are not limited to an object-oriented programming language such as Java, Smalltalk, and C++, and conventional procedural programming languages such as "C" language or similar programming languages. The program codes may be executed entirely on a user computer, partly on a user computer, as a stand-alone software package, partly on a user computer and partly on a remote computer, or entirely on a remote computer or a server. In a case where a remote computer is involved, the remote computer can be connected to a user computer through any kind of networks, including (a LAN or a WAN, or can be connected to an external computer (for example, through an Internet using an Internet service provider).

The flowcharts and block diagrams in the accompanying drawings illustrate possible system architectures, functions, and operations that may be implemented by a system, a method, and a computer program product according to various embodiments of the present disclosure. In this regard, each block in a flowchart or a block diagram may represent a module, a program, or a part of a code. The module, the program, or the part of the code includes one or more executable instructions configured to implementing specified logic functions. In some implementations used as substitutes, functions annotated in blocks may alternatively occur in a sequence different from that annotated in an accompanying drawing. For example, actually two blocks shown in succession may be performed basically in parallel, and sometimes the two blocks may be performed in a reverse sequence. This is determined by a related function. It is also noted that each box in a block diagram and/or a flowchart and a combination of boxes in the block diagram and/or the flowchart may be implemented by using a dedicated hardware-based system configured to perform a specified function or operation, or may be implemented by using a combination of dedicated hardware and a computer instruction.

The units described in the embodiments of the present disclosure can be implemented through software or hardware. The name of a module does not constitute a limitation on this module itself in a situation. For example, a first display module may be further described as "a module configured to display a captured-image region and a material display region on a target interface in response to a preset operation, wherein an association relationship exists between the captured-image region and a size and/or display position of the material display region".

The functions described herein above may be performed, at least in part, by one or a plurality of hardware logic components. For example, non-restrictively, example hardware logic components that can be used include: a Field Programmable Gate Array (FPGA), an Application Specific Integrated Circuit (ASIC), Application Specific Standard Parts (ASSP), a System on Chip (SOC), a Complex Programmable Logic Device (CPLD), and the like.

In the context of the present disclosure, a machine-readable medium may be a tangible medium that may include or store a program for use by an instruction execution system, apparatus, or device or in connection with the instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination of the above content. More specific examples of the machine-readable storage medium may include an electrical connection based on one or more wires, a portable computer disk, a hard disk drive, a RAM, a ROM, an EPROM or flash memory, an optical fiber, a portable CD-ROM, an optical storage device, a magnetic storage device, or any suitable combinations of the above content.

According to one or more embodiments of the present disclosure, a method for interface display is provided, including: displaying a captured-image region and a material display region on a target interface in response to a preset operation, wherein an association relationship exists between the captured-image region and a size and/or display position of the material display region; and displaying a first image in the captured-image region, displaying, in the material display region, at least one material identifier corresponding to at least one capturing material, and display a capturing control on the target interface. Image content in the first image is consistent with framing content of a capturing function corresponding to the target interface. The capturing control is configured to perform, after being triggered in response to a target material identifier in a selected state exists in the at least one material identifier, capturing based on a target capturing material corresponding to the target material identifier.

According to one or more embodiments of the present disclosure, the capturing control is displayed in the captured-image region and/or the material display region.

According to one or more embodiments of the present disclosure, displaying a captured-image region and a material display region on a target interface in response to a preset operation includes: performing, in a capturing interface, switching from the capturing interface to the target interface in response to a preset interface switching operation, and displaying the captured-image region and the material display region on the target interface.

According to one or more embodiments of the present disclosure, a second image corresponding to the capturing function is displayed on the capturing interface. A size of the first image is less than a size of the second image. A size ratio of the first image is consistent with a size ratio of the second image.

According to one or more embodiments of the present disclosure, the captured-image region is included in a target region. The target region further includes a control display region. An association relationship exists between a size of the target region and a size of the material display region

According to one or more embodiments of the present disclosure, a target control is displayed in the control display region. The target control includes at least one of a capturing setting control, a material associated control, or the capturing control.

According to one or more embodiments of the present disclosure, the material associated control includes a material attribute related control and/or a material-based interaction control.

According to one or more embodiments of the present disclosure, the currently displayed target control in the control display region is associated with the target capturing material.

According to one or more embodiments of the present disclosure, at least one of a type, a number, or a style of the currently displayed target control in the control display region is associated with the target capturing material.

According to one or more embodiments of the present disclosure, the method further includes displaying a preset hovering control on a top layer of the material display region, and displaying a resource identifier corresponding to a preset media resource corresponding to the target capturing material in the preset hovering control.

According to one or more embodiments of the present disclosure, a display style of the material display region includes a first interaction style and a second interaction style. Different interaction styles correspond to different interaction operations.

According to one or more embodiments of the present disclosure, the first interaction style includes material identifiers which are arranged in a single-row list style, and/or, the second interaction style includes material identifiers which are arranged in a matrix style.

According to one or more embodiments of the present disclosure, performing, in a capturing interface, switching from the capturing interface to the target interface in response to a preset interface switching operation, and displaying the captured-image region and the material display region on the target interface includes: performing, in the capturing interface, switching from a preset region to the material display region in response to a preset region switching operation, wherein the material display region after switching is displayed in the first interaction style; and performing switching from the capturing interface to the target interface in response to the preset interface switching operation, and displaying the captured-image region and the material display region on the target interface, wherein the material display region in the target interface is displayed in the second interaction style.

According to one or more embodiments of the present disclosure, performing switching from the capturing interface to the target interface includes: adjusting a size of the captured-image region in the capturing interface to cause the adjusted captured-image region to adapt to the material display region displayed in the second interaction style to achieve the switching from the capturing interface to the target interface.

According to one or more embodiments of the present disclosure, adjusting a size of the captured-image region in the capturing interface includes: scaling down the second image corresponding to the capturing function in the capturing interface into the first image.

According to one or more embodiments of the present disclosure, the material display region displayed in the first interaction style includes a sliding list including the at least one material identifier corresponding to the at least one capturing material, and a preset expand control, and the method further includes: in response to a preset sliding operation for the sliding list, controlling the at least one material identifier in the sliding list to move, and hiding the preset expand control in the moving process to increase the material identifiers displayed in the sliding list.

According to one or more embodiments of the present disclosure, in response to the target material identifier in the selected state exists in the at least one material identifier, the first image includes an image obtained after the target capturing material is applied to captured content.

According to one or more embodiments of the present disclosure, the method further includes: in response to a triggering operation for the capturing control, performing capturing based on the target capturing material corresponding to the target material identifier, and determining work to be posted according to a capturing result.

According to one or more embodiments of the present disclosure, the association relationship exists between the captured-image region and at least one of the size or display position of the material display region includes the captured-image region or the material display region do not have an intersection.

According to one or more embodiments of the present disclosure, an interface display apparatus is provided, including: a first display module, configured to: display a captured-image region and a material display region on a target interface in response to a preset operation, wherein an association relationship exists between the captured-image region and a size and/or display position of the material display region; and a second display module, configured to: display a first image in the captured-image region, display, in the material display region, at least one material identifier corresponding to at least one capturing material, and display a capturing control on the target interface, wherein image content in the first image is consistent with framing content of a capturing function corresponding to the target interface; and the capturing control is configured to perform, after being triggered in response to a target material identifier in a selected state exists in the at least one material identifier, capturing based on a target capturing material corresponding to the target material identifier.

According to one or more embodiments of the present disclosure, an electronic device is provided. The electronic device includes: one or more processors; and a storage apparatus, configured to storage one or more program. The one or more programs, when run by the one or more processors, cause the one or more processors to implement the method for interface display provided in the embodiments of the present disclosure.

According to one or more embodiments of the present disclosure, a storage medium including computer-executable instructions is provided. When executed by a computer processor, the computer-executable instructions are configured to perform the method for interface display provided in the embodiments of the present disclosure.

Although various operations are depicted in a specific order, this should not be understood as requiring these operations to be executed in the specific order shown or in a sequential order. In certain environments, multitasking and parallel processing may be advantageous. Similarly, although implementation details are included in the above discussion, these should not be interpreted as limiting the scope of the present disclosure. Some features described in the context of individual embodiments can also be combined and implemented in a single embodiment. Various features that are described in the context of the single embodiment may also be implemented in a plurality of embodiments separately or in any suitable sub-combinations.

Although the subject matter has been described in a language specific to structural features and/or method logical actions, it should be understood that the subject matter limited in the attached claims may not necessarily be limited to the specific features or actions described above. The specific features and actions described above are only exemplary forms for implementing the claims.

## Claims

1. A method for interface display, comprising:
displaying a captured-image region and a material display region on a target interface in response to a preset operation, wherein an association relationship exists between the captured-image region and at least one of a size or a display position of the material display region; and
displaying a first image in the captured-image region, and displaying, in the material display region, at least one material identifier corresponding to at least one capturing material, and displaying a capturing control on the target interface, wherein an image content in the first image is consistent with a framing content of a capturing function corresponding to the target interface; and the capturing control is configured to perform, after being triggered in response to a target material identifier in a selected state exists in the at least one material identifier, capturing based on a target capturing material corresponding to the target material identifier.

2. The method according to claim 1, wherein the capturing control is displayed in at least one of the following regions: the captured-image region or the material display region.

3. The method according to claim 1, wherein displaying the captured-image region and the material display region on the target interface in response to the preset operation comprises:
performing, on a capturing interface, switching from the capturing interface to the target interface in response to a preset interface switching operation, and displaying the captured-image region and the material display region on the target interface.

4. The method according to claim 3, wherein a second image corresponding to the capturing function is displayed on the capturing interface; a size of the first image is less than a size of the second image; and a size ratio of the first image is consistent with a size ratio of the second image.

5. The method according to claim 4, wherein the captured-image region is comprised in a target region; the target region further comprises a control display region; and an association relationship exists between a size of the target region and a size of the material display region.

6. The method according to claim 5, wherein a target control is displayed in the control display region; and the target control comprises at least one of a capturing setting control, a material associated control, or the capturing control.

7. The method according to claim 6, wherein the material associated control comprises at least one of the following: a material attribute-related control or a material-based interaction control.

8. The method according to claim 6, wherein the currently displayed target control in the control display region is associated with the target capturing material.

9. The method according to claim 8, wherein at least one of a type, a number, or a style of the currently displayed target control in the control display region is associated with the target capturing material.

10. The method according to claim 1, further comprising:
displaying a preset hovering control on a top layer of the material display region, and displaying a resource identifier corresponding to a preset media resource corresponding to the target capturing material in the preset hovering control.

11. The method according to claim 3, wherein a display style of the material display region comprises a first interaction style and a second interaction style; and different interaction styles correspond to different interaction operations.

12. The method according to claim 11, wherein the first interaction style comprises material identifiers which are arranged in a single-row list style, and/or, the second interaction style comprises material identifiers which are arranged in a matrix style.

13. The method according to claim 12, wherein performing, in the capturing interface, switching from the capturing interface to the target interface in response to the preset interface switching operation, and displaying the captured-image region and the material display region on the target interface comprises:
performing, in the capturing interface, switching from a preset region to the material display region in response to the preset region switching operation, wherein the material display region after switching is displayed in the first interaction style; and
performing switching from the capturing interface to the target interface in response to the preset interface switching operation, and displaying the captured-image region and the material display region on the target interface, wherein the material display region on the target interface is displayed in the second interaction style.

14. The method according to claim 13, wherein performing switching from the capturing interface to the target interface comprises:
adjusting a size of the captured-image region in the capturing interface to cause the adjusted captured-image region to adapt to the material display region displayed in the second interaction style to implement the switching from the capturing interface to the target interface.

15. The method according to claim 14, wherein adjusting a size of the captured-image region in the capturing interface comprises:
scaling down the second image corresponding to the capturing function in the capturing interface into the first image.

16. The method according to claim 13, wherein the material display region displayed in the first interaction style comprises a sliding list including the at least one material identifier corresponding to the at least one capturing material, and including a preset expand control, and
wherein the method further comprises:
in response to a preset sliding operation for the sliding list, controlling the at least one material identifier in the sliding list to move, and hiding the preset expand control in the moving process, so as to increase material identifiers displayed in the sliding list.

17. The method according to claim 1, wherein in response to the target material identifier in the selected state exists in the at least one material identifier, the first image comprises a image obtained after the target capturing material is applied to a captured content.

18. The method according to claim 1, further comprising:
in response to a triggering operation for the capturing control, performing capturing based on the target capturing material corresponding to the target material identifier, and determining work to be posted according to a capturing result.

19. The method according to claim 1, wherein the association relationship exists between the captured-image region and at least one of the size or display position of the material display region comprises: the captured-image region and the material display region do not have an intersection.

20. An apparatus for interface display, comprising:
a first display module, configured to: display a captured-image region and a material display region on a target interface in response to a preset operation, wherein an association relationship exists between the captured-image region and at least one of a size or a display position of the material display region;
a second display module, configured to: display a first image in the captured-image region, and display, in the material display region, at least one material identifier corresponding to at least one capturing material, and display a capturing control on the target interface, wherein image content in the first image is consistent with framing content of a capturing function corresponding to the target interface; and the capturing control is configured to perform, after being triggered in response to a target material identifier in a selected state exists in the at least one material identifier, capturing based on a target capturing material corresponding to the target material identifier.

21. The apparatus according to claim 20, comprising modules configured to perform the method according to any one of claims 2 to 19.

22. An electronic device, comprising:
at least one processor, and
a storage apparatus, configured to storage at least one program,
wherein the at least one program, when executed by the at least one processor, causes the at least one processor to perform the method for interface display according to any of claims 1 to 19.

23. A storage medium comprising computer-executable instructions, wherein when executed by a computer processor, cause the processor to perform the method for interface display according to any of claims 1 to 19.
